Europäisches Patentamt

European Patent Office

Office européen des brevets

(11) Veröffentlichungsnummer: **0 369 051**
**A1**

## (12) EUROPÄISCHE PATENTANMELDUNG

(21) Anmeldenummer: **88119048.2**

(22) Anmeldetag: **15.11.88**

(51) Int. Cl.⁵: **G01L 3/10**

(43) Veröffentlichungstag der Anmeldung:
**23.05.90 Patentblatt 90/21**

(84) Benannte Vertragsstaaten:
**AT BE CH DE ES FR GB GR IT LI LU NL SE**

(71) Anmelder: **I M T M - BAN**
**Tschapaev-Strasse 53**
**BG-1574 Sofia(BG)**

(72) Erfinder: **Hristemov, Dimiter Mihajlov,**
**Dipl.-Ing.**
**P. Lilov-Strasse 24**
**BG-1574 Sofia(BG)**

(74) Vertreter: **Ebbinghaus, Dieter et al**
**Patentanwälte v. Füner, Ebbinghaus, Finck**
**Mariahilfplatz 2 & 3**
**D-8000 München 90(DE)**

(54) **Transformatorartiger striktiomagnetischer Wandler zur Drehmomentmessung.**

(57) Der erfindungsgemäße transformatorartige striktiomagnetische Wandler dient zur Dreh- und Torsionsmomentmessung unmittelbar auf Wellen von Motoren, Mechanismen und anderem, bei deren Drehung und im statischen Zustand. Er ist einfach aufgebaut und hat eine hohe Empfindlichkeit. Der Wandler enthält eine Welle 1 aus ferromagnetischem oder nichtferromagnetischem Werkstoff mit striktiomagnetischen Eigenschaften, eine koaxial zur Welle 1 angeordnete Erregerwicklung 2, einen ferromagnetischen Zylinder 3, der koaxial und symmetrisch zur Erregerwicklung 2 angeordnet ist, und eine den Zylinder 3 umgebende Meßwicklung 4, deren Windungen senkrecht zu denen der Erregerwicklung 2 gewickelt sind. Auf der Welle 1 ist im Bereich der Wicklungen 2, 4 ein Band oder Überzug 5 aus einem Werkstoff mit striktiomagnetischen Eigenschaften angeordnet und fest mit der Welle 1 verbunden.

## Transformatorartiger striktiomagnetischer Wandler zur Drehmomentmessung

Die Erfindung bezieht sich auf einen transformatorartigen striktiomagnetischen Wandler zur Drehmomentmessung mit einer einen striktiomagnetischen Werkstoff, eine Erreger-und eine Meßwicklung tragenden Welle, wobei die eine Wicklung koaxial und die andere senkrecht zur Welle gewickelt ist und beide transformatorartig miteinander gekoppelt sind. Ein solcher Wandler ist aus der SE-A 174 971 bekannt. Wandler dieser Art können zur Dreh- und Torsionsmomentmessung unmittelbar auf Wellen von Motoren, verschiedener Mechanismen, Aggregate und dergleichen sowohl unter statischen Bedingungen als auch bei Drehung eingesetzt werden.

Der bekannte Wandler ist verhältnismäßig kompliziert aufgebaut, da die Erregerwicklung mittels Schleifkontakten gespeist wird und ein kompliziertes Magnetsystem erforderlich ist. Daher kann die Welle nicht als Konstruktionselement verwendet werden und der Wandler muß als separates Glied in den Kräftekreis der Übertragung des Torsionsmomentes gekuppelt sein. Die Anzahl der Windungen der Erregerwicklung ist begrenzt, so daß der bekannte Wandler eine verhältnismäßig geringe Empfindlichkeit hat.

Der Erfindung liegt die Aufgabe zugrunde, einen striktiomagnetischen Wandler zur Drehmomentmessung zu schaffen, der einfach aufgebaut ist und eine hohe Empfindlichkeit aufweist.

Diese Aufgabe wird erfindungsgemäß dadurch gelöst, daß die koaxial zur Welle gewickelte Wicklung die Erregerwicklung ist und die andere, die Meßwicklung, auf einen ferromagnetischen Zylinder gewickelt ist, der Welle und Erregerwicklung umgibt.

Der erfindungsgemäße transformatorartige striktiomagnetische Wandler zur Drehmomentmessung ist einfach und fertigungsgerecht aufgebaut. Das Ausgangssignal ist unabhängig von der Drehgeschwindigkeit, da der äquivalente Luftspalt von ihr unabhängig ist. Der erfindungsgemäße Wandler hat ferner infolge des erzwungenen Durchganges durch den Magnetkern eine erhöhte Empfindlichkeit. Der Magnetkern ist nämlich umgeben von der sekundären Meßwicklung des gesamten, von der primären Erregerwicklung erregten Magnetflusses, wobei die in allen Fällen unvermeidlichen Streuflüsse eliminiert werden.

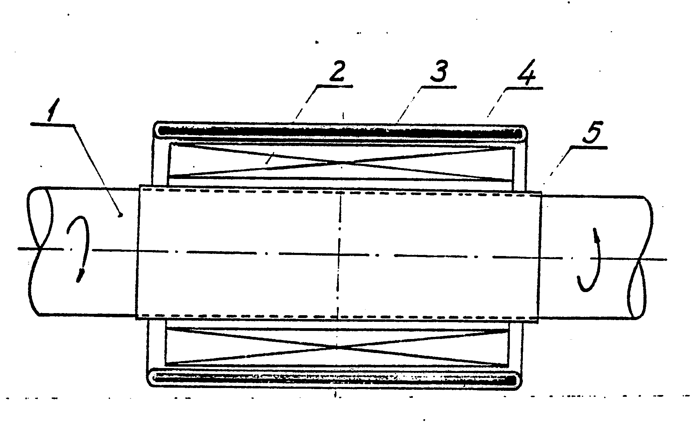

Im folgenden wird ein Ausführungsbeispiel eines erfindungsgemäßen transformatorartigen striktiomagnetischen Wandlers anhand der Zeichnung erläutert. Die Zeichnung zeigt einen Querschnitt durch einen erfindungsgemäßen transformatorartigen striktiomagnetischen Wandler zur Drehmomentmessung.

Der Wandler besteht aus einer Welle 1 aus ferromagnetischem oder nicht ferromagnetischem Werkstoff mit guten striktiomagnetischen Eigenschaften, einer koaxial zur Welle 1 angeordneten Erregerwicklung 2, einem ferromagnetischen Zylinder 3 mit toroidaler Form, der koaxial und symmetrisch auf der Erregerwicklung 2 angeordnet ist, einer Meßwicklung 4, die den Zylinder 3 umgibt und deren Windungen senkrecht zu denen der Erregerwicklung 2 gewickelt sind, und einem im Bereich unterhalb der Wicklungen 2, 4 angeordneten Band oder Überzug 5 aus amorphem oder anderem Werkstoff mit guten striktiomagnetischen Eigenschaften. Überzug 5 und Welle 1 sind mechanisch fest miteinander verbunden.

Die Wirkungsweise des transformatorartigen striktiomagnetischen Wandlers zur Drehmomentmessung kann mittels der figurativen Vorstellungen vom Magnetfeld erklärt werden, das aus magnetischen Kraftlinien (Faraday'sche Vorstellungen) besteht, sowie durch das Prinzip ihrer Kontinuität.

Der von der primären Erregerwicklung 2 erregte Magnetfluß tritt durch den Bereich der Welle 1 unterhalb der Wicklungen 2, 4 oder entsprechend das Band bzw. den auf sie aufgetragenen Überzug 5, durch die Luftspalte zwischen Welle 1 und Magnetkern und durch den Magnetkern hindurch. Beim Fehlen einer Torsion ist das Magnetfeld in der Welle 1 und im Magnetkern koaxial und in den Luftspalten radial. Da die Erreger- und die Meßwicklung 2,4 senkrecht zueinander gewickelt sind, fehlt ein gegenseitiger Fluß zwischen ihnen, so daß keine EMK induziert wird. Im Falle einer Torsion entstehen in der Welle 1 mechanische Spannungen mit wechselnden Vorzeichen, die senkrecht zueinander gerichtet sind und mit der Achse der Welle einen Winkel von $+45°$ einschließen. Infolgedessen entsteht im Bereich der Welle 1 eine helikoidale magnetische Anisotropie, so daß auch der Magnetfluß eine helikoidale Form erhält. Aus diesem Grund erhält der Fluß außer der axialen zusätzlich eine Kreiskomponente. In Übereinstimmung mit dem Kontinuitätsprinzip der magnetischen Kraftlinien im Bereich des Magnetkerns hat das Magnetfeld auch einen helikoidalen Charakter und folglich auch eine Kreiskomponente, die jedoch einen rückwärtigen Gang aufweist. Diese Komponente ist die Ursache für die Induktion einer EMK in die Meßwicklung 4, die innerhalb bestimmter Grenzen proportional zum gemessenen Drehmoment ist. Im Bereich der Luftspalte ändert das Magnetfeld seinen radialen Charakter praktisch nicht, da die magnetische Permeabilität der Luft um einige Größenordnungen kleiner ist als die magnetische Permeabilität der Welle 1 bzw. des Bandes 5 und des Magnetkerns 3. Änderungen der Drehgeschwindigkeit der Welle beeinflussen die Empfindlichkeit des Wandlers ebensowenig wie ihr Stillstand, da dies nicht mit einer Änderung der Topografie des Magnetfeldes der Welle 1, der Kreisflüsse oder der Größe des magnetischen Skineffekts verbunden ist.

**Ansprüche**

Transformatorartiger striktiomagnetischer Wandler zur Drehmomenterfassung, mit einer einen striktiomagnetischen Werkstoff (Überzug 5), eine Erreger- (2) und eine Meßwicklung (4) tragenden Welle (1), wobei die eine Wicklung (2) koaxial und die andere (4) senkrecht zur Welle (1) gewickelt ist und beide Wicklungen transformatorartig miteinander gekoppelt sind, **dadurch gekennzeichnet**, daß die koaxial zur Welle (1) gewickelte Wicklung die Erregerwicklung (2) ist, und daß die Meßwicklung (4) auf einen die Welle (1) und die Erregerwicklung (2) umgebenden ferromagnetischen Zylinder (3) gewickelt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 319 449 (ASEA)<br>* Seite 8, Zeilen 28-37; Seite 9, Zeilen 1-10; Figur 2 *<br>----- | 1 | G 01 L 3/10 |

RECHERCHIERTE SACHGEBIETE (Int. Cl.5)

G 01 L

Der vorliegende Recherchenbericht wurde für alle Patentansprüche erstellt

| Recherchenort | Abschlußdatum der Recherche | Prüfer |
|---|---|---|
| DEN HAAG | 23-06-1989 | ZAFIROPOULOS N. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)